# EUROPEAN PATENT APPLICATION

(11) **EP 2 793 105 A1**
(43) Date of publication of application: **22.10.2014**
(21) Application number: 13305516.0
(22) Date of filing: 19.04.2013
(51) Int. Cl.: G06F 3/038

(54) **Controlling a user interface of an interactive device**

(71) Applicant: ALCATEL LUCENT, 92100 Boulogne-Billancourt (FR)
(72) Inventor: Aerts, Maarten, 9120 Beveren-Waas (BE); Lievens, Sammy, 2930 Brasschaat (BE); Namboodiri, Vinay, 3000 Leuven (BE); Tytgat, Donny, 9040 Sint-Amandsberg (BE)
(74) Representative: ALU Antw Patent Attorneys

(57) **Abstract**

Embodiments relate to a method for controlling a user interface of an interactive device (1), said method being executed by said interactive device (1) and comprising:
- determining an activity level (Lᵢ, Lₒ) of a user interface signal (I, O), and
- in response to a determination that said activity level is above a threshold (Tᵢ, To):
- determining a command (CMDᵢ) in function of said user interface signal, said user interface signal being a first input signal (I) provided by a first input sensor (4), or
- determining said user interface signal in function of a command (CMDₒ), said user interface signal being an output signal (O) for an output interface (5), wherein said method comprises:
- determining context data (V) at least in function of one second input signal (I") provided by a second input sensor (4), and
- determining said threshold (Tᵢ, Tₒ) in function of said context data (V).

## Description

### FIELD OF THE INVENTION

The present invention relates to the field of user interfaces for interactive devices.

### BACKGROUND

A typically interactive device has a user interface with a multitude of user input possibilities and a multitude of user output possibilities. For example, the input possibilities may involve a keyboard, a pointer, a touchscreen, speech recognition, hand gestures recognition, head movement detection... The output possibilities may involve a visual display, sounds, generated speech, phone vibrations... These different possibilities may be referred to as input modalities and output modalities.

An input modality should generate a command only in case of an anomaly, i.e. a user's behavior different from the normal course of action. This requirement puts a sort of threshold level. Everything under the threshold level is considered background noise, and everything above is considered a user command. For example, when speech commands are used, a speech analysis module has to estimate which words are captured. Since every user under different circumstances pronounces words differently, speech analysis allows for a certain amount of noise in its speech model. If it allows a lot of noise, some other words may be falsely regarded as valid commands. If it only allows small variations of the model, the user will have to pronounce the word in a very exact manner. Hence, the speech analysis module will have to set a good threshold value for this noise parameter. Similar threshold concepts exist for other input modalities. This threshold value is either fixed or adaptable to some extent to simple measurements of the input sensor signal.

However, when an interactive device has a plurality of input modalities and always accepts commands from each modality, there may be far more false positives, i.e. unintended interfacing actions. There may even be contradictories between the different modalities. A solution is to let the user announce which input modality he is going to use. But this, by definition, is an interfacing command on its own and only shifts the problem to what modality to use for this announcement. Usually this is solved by using noise-safe announcements, like using buttons to select, speaking a fixed 'start speech'-like command or raising your hand for 5 seconds. However, such commands are unnatural to normal Human-Human interfacing and should be avoided in Human-Computer Interfaces.

Similarly, a user may select a preferred output modality. For example, the user of a smartphone may select a "vibrate" mode during a meeting and a "loud" mode when outside. In this case, the user is required to specify the selected output modality.

### SUMMARY

It is thus an object of embodiments of the present invention to propose a method for controlling a user interface and an interactive device, which do not show the inherent shortcomings of the prior art.

Accordingly, embodiments of the present invention relates to a method for controlling a user interface of an interactive device, the method being executed by the interactive device and comprising:
- determining an activity level of a user interface signal, and
- in response to a determination that the activity level is above a threshold:
   - determining a command in function of the user interface signal, the user interface signal being a first input signal provided by a first input sensor, or
   - determining the user interface signal in function of a command, the user interface signal being an output signal for an output interface,
   wherein said method comprises:
   - determining context data at least in function of one second input signal provided by a second input sensor, and
   - determining said threshold in function of said context data.

Correlatively, embodiments of the present invention relates to an interactive device having a user interface and comprising:
- means for determining an activity level of a user interface signal, and
- means, activated in response to a determination that the activity level is above a threshold, for:
   - determining a command in function of the user interface signal, the user interface signal being a first input signal provided by a first input sensor, or
   - determining the user interface signal in function of a command, the user interface signal being an output signal for an output interface,
   wherein the interactive device comprises:
   - means for determining context data at least in function of one second input signal provided by a second input sensor, and
   - means for determining said threshold in function of said context data.

Determining context data may comprise:
- determining a plurality of context cues, at least one of said context cues being determined in function of said second input signal, and
- determining a context vector by applying a dimension reduction technique.

The dimension reduction technique may split the context cues into a relevant set and an irrelevant set of parameters, based on priors and an orthogonality constraint.

Determining said threshold in function of said context data may comprise:
- using a set of rules for associating a threshold value with the context data,
- determining a user feedback, and
- updating said set of rules in function of said user feedback.

Determining said user feedback may comprise:
- determining a positive reward in response to a determination that a user of the interactive device used an input modality associated with said input signal in a proper manner, in function of said input signal,
- determining a negative reward in response to a determination that a user of the interactive device used said input modality with a signal to noise ratio lower that a predetermined threshold.

The method may comprise:
- determining a second activity level in function of a third input signal,
- determining a second threshold in function of said context data, and
- in response to a determination that said second activity level is above said second threshold, determining a command in function of said third input signal.

In other words, in that case, there are at least two input modalities. Of course, there may be more than two input modalities.

The method may comprise determining a preferred input modality in function of said threshold, said second threshold and/or said context data, and outputting said preferred input modality to the user.

According to an example, the input signal is a sound signal, and the interactive device has an interface analysis module associated with a speech recognition input modality.

According to an example, the second input signal is a video signal, and the interactive device has an interface analysis module associated with a hand gesture recognition input modality.

The method may comprise:
- determining a third activity level in function of said command,
- determining a third threshold in function of said context data, and
- in response to a determination that said third activity level is above said third threshold, determining a second output signal in function of said command.

In other words, in that case, there are at least two output modalities. Of course, there may be more than two output modalities.

According to an example, the output signal is a sound signal associated with a sound notification output modality.

According to an example, the second output signal is an image signal associated with a visual notification output modality.

Embodiments of the invention also provide a computer program comprising instructions for performing the method mentioned before when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a structural view of an interactive device according to an embodiment of the invention,
Figure 2 is a functional view of the interactive device of figure 1, and
Figure 3 is a flowchart of a method for controlling a user interface of an interactive device, according to an embodiment of the invention.

### DESCRIPTION OF EMBODIMENTS

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

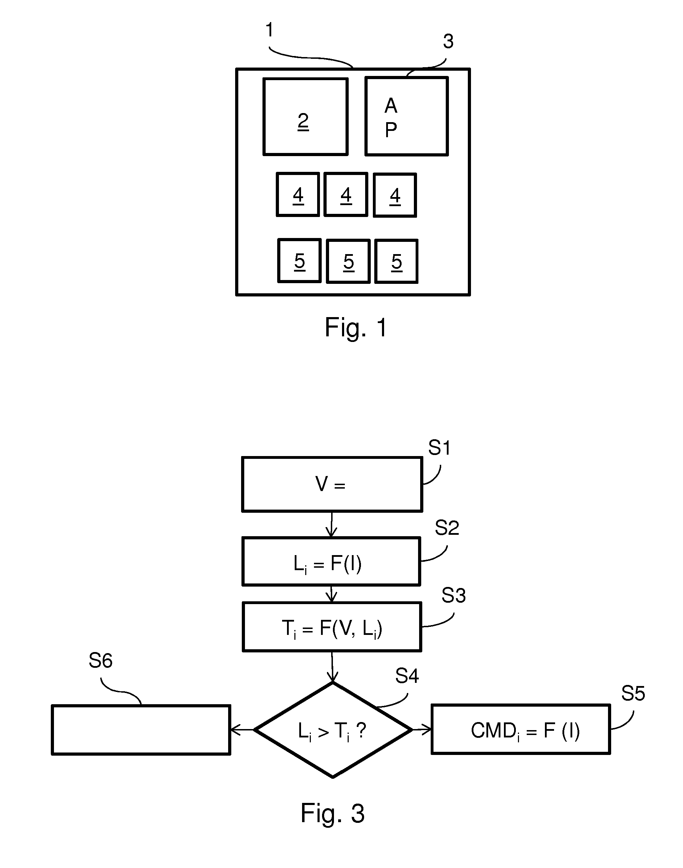

**Figure 1** is a structural view of an interactive device 1 according to an embodiment of the invention.

The interactive device 1 has the material architecture of a computer and comprises a processor 2, a memory 3, a plurality of input sensors 4 and a plurality of output interfaces 5.

The processor 2 is capable of executing computer programs stored in the memory 3. The memory 3 stores an application A and a control program P. When the processor 2 execute the application A, the user of interactive device 1 may interact with the application A through the input sensors 4 and the output interfaces. The control program P controls the link between the input sensors 4, the output interfaces 5 and the application A. The control program P may for example be a part of the operating system of the interactive device 1.

The input sensors 4 correspond to a plurality of input modalities of the interactive device 1. Similarly, the output interfaces 5 correspond to a plurality of output modalities of the interactive device 1. The control program P monitors the context of the interactive device 1 and, in function of the context, determines which input modalities and which output modalities should be used.

Figure 1 shows that the interactive device 1 comprises the input sensors.
In another embodiment, some of the input sensors 4 are external sensors connected to the interactive device 1, for example by a wire or a wireless link.

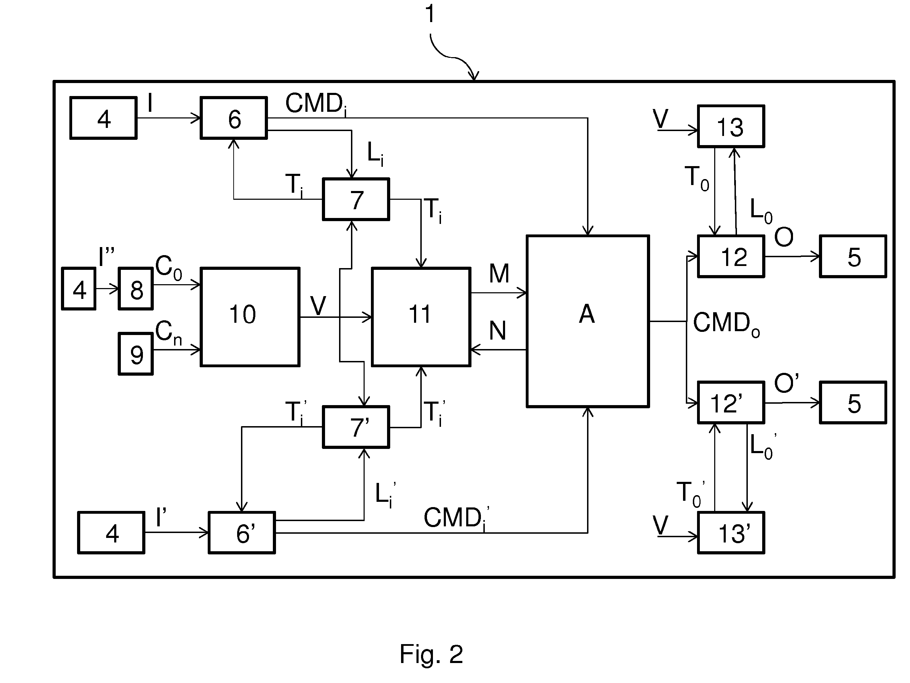

**Figure 2** is a functional view of the interactive device 1. The various functional modules shown on figure 2, other than the input sensors 4, the output interfaces 5 and the application A, may correspond to the execution of the control program P by the processor 2.

The interactive device 1 comprises a plurality of context determining modules 8 and 9 and a context analysis module 10.

A context determining module 8 determines a context cue in function of at least one input signal I" provided an input sensor 4. Examples of input sensors 4 and corresponding context cues include:
- A positioning device (for example GPS-based) can make the distinction between the user being home, at the office, a friend's place, in a restaurant, on the road, on vacation, ...
- A microphone's audio signal can be analyzed to estimate the amount of background noise, the number of people concurrently speaking, the distance to other people speaking (which may be a measure for how socially acceptable it is for you to start speaking)
- A camera's video stream can be analyzed to recognize an outdoor environment, the inside of your home, count the number of people in your neighborhood, see if you draw (unwanted) attention of others. An external camera looking at you can see if your hands are free, if you are in a relaxed position, if you are with company, if you are close to a device...
- A gyroscope or dynamometer can measure if you are holding your device, if you are walking...

These examples show that a plurality of context cues may be determined in function of one single input signal. Also, a context cue may be determined in function if more than one input signal.

A context determining module 9 determines a context cue independently of the input sensors 4. Example of such context cues include:
- State of the application A, task executed by the user of application A
- Information determined in function of a user calendar
- The time of day...

The context analysis module 10 receives the context cues C₀ to Cₙ determined by the context determining modules 8 and 9, and determines a context vector V in function of the context cues C₀ to Cₙ.

In a simple embodiment, the context vector V contains the context cues C₀ to Cₙ: V = {C₀, C₁, ... Cₙ}.

However, the context analysis module 10 receives a large amount of sensorial data. At each moment in time, a high-dimensional feature vector V₀ of measurements is available: V₀ = {C₀, C₁, ... Cₙ}. These measurements contain a lot of redundant information and a single element Cᵢ in the feature vector may correlate to many underlying parameters. Some of these parameters we want to be invariant to, i.e. they are irrelevant. Such parameters are e.g. lighting conditions, color of the wall, presence of decorative objects (for cameras), pressure (for touch screens), voice spectrum, coughing, pitch (for speech input), ... Some other parameters are important though, e.g. identity of a person, pose of a person (for cameras), position, direction (for touch screens), words (for speech input).

The problem at hand is one of dimensionality reduction. Thus, in one embodiment, the context analysis module 10 determines the context vector V in function of the feature vector V₀, by applying a dimension reduction technique. For this, many techniques exist (Principal Component Analysis, Kernel PCA, MultiDimensional Scaling, Local Linear Embedding, Spatio-Temporal Manifolds, ...).

In one embodiment, the dimension reduction technique used by the context analysis module 10 uses priors for the context vector elements and special orthogonality constraints. For example, the context analysis module 10 uses the Shared Gaussian Process Latent Variable Model. This technique estimates the fewer hidden underlying parameters, based on the large measurement vector V₀ and can split it in a relevant and irrelevant set, based on priors and an orthogonality constraint. This has the effect that the context vector V represents meaningful input for the threshold estimator modules 7, 7', 13, 13' described hereafter, which uses rules for determining a threshold in function of the context vector V.

The interactive device 1 comprises an interface analysis module 6 and a threshold estimator module 7 associated with a first input modality. The interface analysis module 6 analyses the input signal I provided by an input sensor 4 for determining an activity level Lᵢ of the input signal I. The activity level is a measure of how much (false or true) positive input the interface analysis module 6 gets, hence a measure of the noise level in absence of an intended command. The threshold estimator 7 determines a threshold Tᵢ in function of the context vector V provided by the context analysis module 10 and in function of the activity level Lᵢ. In case the activity level Lᵢ is above the threshold Tᵢ, the interface analysis module 6 determines a command CMDᵢ for the application A, in function of the input signal I. In contrast, if the activity level Lᵢ is not above the threshold Tᵢ, no command is issued.

Correspondingly, the interactive device 1 comprises an interface analysis module 6' and a threshold estimator module 7' associated with a second input modality. The interface analysis module 6' analyses the input signal I' provided by an input sensor 4 for determining an activity level Lᵢ' of the input signal I'. The threshold estimator 7' determines a threshold Tᵢ' in function of the context vector V provided by the context analysis module 10 and in function of the activity level Lᵢ'. In case the activity level Lᵢ' is above the threshold Tᵢ', the interface analysis module 6' determines a command CMDᵢ' for the application A, in function of the input signal I'.

In the example of a speech recognition input modality, a predetermined set of words may be associated with corresponding commands. The activity level Lᵢ reflects the level of correspondence between a word detected in an audio input signal and a word of the set. If the activity level Lᵢ is above the threshold Tᵢ, in other words, if the correspondence is high enough, the command CMDᵢ associated with the detected word will be issued.

In the example of a hand gesture recognition input modality, a predetermined set of hand gestures may be associated with corresponding commands. The activity level Lᵢ reflects the level of correspondence between a hand gesture captured in a video input signal and a hand gesture of the set. If the activity level Lᵢ is above the threshold Tᵢ, in other words, if the correspondence is high enough, the command CMDᵢ associated with the detected hand gesture will be issued.

The interactive device 1 of figure 2 comprises two input modalities. Of course, in other embodiments, the interactive device may comprise more than two input modalities. In that case, there is an interface analysis module and a threshold estimator module associated with the different input modalities. In some embodiments (not shown), two different input modalities may use the same input signal.

The interactive device 1 also comprises a preferred modality determination module 11. In function of the context vector V and the thresholds Tᵢ, Tᵢ', the preferred modality determination module 11 determines the preferred input modality M and inform the application A thereof. For example, if the threshold Tᵢ is relatively high and the threshold Tᵢ' is relatively low, the preferred modality determination module 11 informs the application A that the preferred input modality M is the first input modality. The preferred modality determination module 11 may also take into account some application needs N for determining the preferred input modality M.

The application A reacts to the commands CMDᵢ, CMDᵢ' received from the interface analysis modules 6, 6'. The application A may also inform the user of the preferred input modality M, for example through one of the output interfaces 5.

The functioning of the interactive device 1, with respect to the input modalities, is as follow. The user may interact with the application A with the first input modality or the input second modality. However, the thresholds Tᵢ and Tᵢ' associated with each input modality depend on the context of the interactive device 1. This context is represented by the context vector V and depends of at least an input signal I". Thus, in some contexts, the threshold Tᵢ may be low and the threshold Tᵢ' may be high. In that case, the user may input command by using the first input modality. In other contexts, the threshold Tᵢ may be high and the threshold Tᵢ' may be low. In that case, the user may input command by using the second input modality. In some other context, both thresholds Tᵢ and Tᵢ' may be low. In that case, the user may input command by using the first or the second input modality. In each case, the user may be informed by the application A of the preferred modality. The user does not need to explicitly specify which input modality he wishes to use, for example he does not need to manipulate a switch.

The application A may issue an output command CMDₒ, for example when it reacts to the commands CMDᵢ, CMDᵢ' received from the interface analysis modules 6, 6'.

The interactive device 1 comprises a command analysis module 12 and a threshold estimator module 13 associated with a first output modality. The command analysis module 12 determines an activity level Lₒ. The activity level Lₒ is a virtual activity level because it represents how effective an output signal O would be if the command analysis module 12 would output an output signal O in response to the output command CMDₒ. The threshold estimator 13 determines a threshold Tₒ in function of the context vector V provided by the context analysis module 10 and in function of the activity level Lₒ. In case the activity level Lₒ is above the threshold Tₒ, the command analysis module 12 determines an output signal O for an output interface 5, in function of the output command CMDₒ. In contrast, if the activity level Lₒ is not above the threshold Tₒ, no output signal is issued.

Correspondingly, the interactive device 1 comprises a command analysis module 12' and a threshold estimator module 13' associated with a second output modality. The command analysis module 12' determines an activity level Lₒ'. The activity level Lₒ' is a virtual activity level because it represents how effective an output signal O' would be if the command analysis module 12' would output an output signal O' in response to the output command CMDₒ. The threshold estimator 13' determines a threshold Tₒ' in function of the context vector V provided by the context analysis module 10 and in function of the activity level Lₒ'. In case the activity level Lₒ' is above the threshold Tₒ', the command analysis module 12' determines an output signal O' for an output interface 5, in function of the output command CMDₒ. In contrast, if the activity level Lₒ' is not above the threshold Tₒ', no output signal is issued.

In the example of a sound notification modality, the virtual activity level Lₒ may be determined for example in function of a preset sound level. In case the context vector V shows that the environment is noisy, the threshold Tₒ would be high and this output modality will not be used unless the preset sound level is also high. In other examples, the virtual activity level may have a fixed, predetermined value.

The interactive device 1 of figure 2 comprises two output modalities. Of course, in other embodiments, the interactive device 1 may comprise more than two output modalities. In that case, there is a command analysis module and a threshold estimator module associated with the different output modalities. In some embodiments (not shown), two different output modalities may use the same output interface 5 (for example, a small icon display output modality and a large text display output modality both use the same display screen as output interface).

The functioning of the interactive device 1, with respect to the output modalities, is as follow. The application A may issue a command CMD₀ without specifying on which output modality it should be used. The thresholds To and To' associated with each output modality depend on the context of the interactive device 1. Thus, in some contexts, the threshold To may be low and the threshold To' may be high. In that case, the output command CMD₀ will cause an output signal O of the first output modality. In other contexts, the threshold To may be high and the threshold To' may be low. In that case, the output command CMD₀ will cause an output signal O' of the second output modality. In some other context, both thresholds To and To' may be low. In that case, the output command CMD₀ will cause an output signal O of the first output modality and an output signal O' of the second output modality. In each case, an appropriate output modality is selected, depending on the context. The user does not need to explicitly specify which output modality he wishes to use, for example he does not need to manipulate a switch.

As mentioned before, the threshold estimator modules 7, 7', 13, 13' determine thresholds in function of the context vector V. The functioning of the threshold estimator module 7 according to an embodiment will be described in more detail. The other threshold estimator modules 7', 13, 13' may have a corresponding functioning.

The threshold estimator module 7 determines the threshold Tᵢ in function of the context vector V, by applying a set of rules R. Furthermore, the threshold estimator module 7 updates the set of rules R by applying a learning algorithm.

Note that these rules must not necessarily be strict mappings, but may be a stochastic relationship. Nonetheless, the word 'rule' is used in the remainder of this description to refer to any regression type.

Some of the rules may be fixed prior knowledge to the system, as defined by experts (e.g. when a person is far away from the remote, this interface is not so much preferred). But rules may vary for different persons and for different cultures (e.g. in some cultures, people will use their hands a lot, so gestures are less reliable, but certainly socially acceptable at all times. The opposite is true in other cultures). Moreover, an expert cannot define rules for every possible situation. Some will have to be inferred from other. Accordingly, the set of rules R may be updated by a learning algorithm. This means that the rules will be dynamic and adaptable to the user preferences. Also the learning algorithm uses feedback from the user.

In machine learning this problem is called Active Learning. Any suitable method of active learning for updating the set of rules R in function of user feedback may be used.

For example, in an embodiment, the threshold estimator module 7 uses a particular technique in this domain, called Reinforcement Learning. This is a method in which an agent interacts with its environment. The environment in return sends rewards back to the agent proportional to how well it perceives the agent's action. It is the agent's objective to learn to earn as much rewards as possible. In the case of the interactive device 1, the agent is the threshold estimator module 7, which can act by setting a threshold Tᵢ for the input signal I. This induces a preference or rejection of that modality towards the user and its context through the application. The user or context acts as the environment (note that the concept of 'environment' here refers to Reinforcement Learning terminology and is different from the environment of the interactive device 1). A positive reward may correspond for example to the use of the input modality in a proper manner. A negative reward may correspond for example to rejecting the input modality and choosing another one, or to improper use of the input modality (use with low PSNR, which means that the modality is not very suitable in the context). As such the agent will start to learn the rules that create much reward and which not, hence for which context which modality is suitable.

The rewards are not only issued directly by the user's use or decline of the interfacing modalities, but may also be based on context analysis itself. E.g. if the interactive device 1 a priori does not know the whereabouts of the remote control, but does choose it as a preferred interface, and the context sensors notice that the user has to get up to pick up the remote, the agent is rewarded negatively and learns that this was not a good choice. Another example is that when the interactive device 1 chooses speech interface but the device's camera detects that this draws unwanted attention and sees disapproving expressions on faces of other people, it receives negative rewards and the threshold estimator learns a rule that in the current context, speech is not preferential.

Such learning algorithm allows adapting the thresholds so that the active input and output modalities present at least some of the following advantages:
- meeting the application needs (e.g. simple navigation, text input, activators, menus, browsing, ...)
- being socially acceptable (e.g. not drawing unwanted attention or disturbing others) and secure (e.g. hands-free inside car)
- being ergonomic (e.g. speech is more easy than keyboard for large texts, hand gestures should only be used for short periods)
- being an anomaly, i.e. different from the normal course of actions (e.g. speech commands are not a good idea in context where you have to speak anyway or where there is a lot of background noise)

The various function of the modules describes above may correspond to steps of a method for controlling a user interface of an interactive device according to an embodiment of the invention.

In the interactive device 1, a variable threshold is determined in function of context data for both the input modalities and the output modalities. In another embodiment, a variable threshold is determined in function of context data only for the input modalities or only for the output modalities.

**Figure 3** is a flowchart of a method for controlling the user interface of the interactive device 1. The method of figure 3 is executed by the interactive device 1. For example, it corresponds to the execution of the computer program P.

At step S1, the context analysis module 10 determines the context vector V. As explained previously, the context vector V is determined in function of the context cues C₀ to Cₙ. At least one of the context cues C₀ to Cₙ is determined in function of an input signal I".

At step S2, the interface analysis module 6 determines an activity level Lᵢ in function of the input signal I. The threshold estimator module 7 determines the threshold Tᵢ in function of the context vector V and the activity level Lᵢ at step S3. As explained previously, the set of rules R for determining the threshold Tᵢ are updated by active learning. Thus, the determination of step S2 is the result of a regression process that has learned from previous observations.

At step S4, the interface analysis module 6 compares the activity level Lᵢ and the threshold Tᵢ. If the activity level Lᵢ is above the threshold Tᵢ, the interface analysis module 6 determines a command CMDᵢ in function of the input signal I for the application A (step S5). In contrast, if the activity level Lᵢ is not above the threshold Tᵢ, the interface analysis module 6 does not issue a command for the application A (step S6).

Corresponding steps (not shown) are executed for the others input modalities and the output modalities. Furthermore, although figure 3 shows steps S1 to S6 as successive steps, the steps may be executed continuously, in parallel.

A first example of interactive device 1 is a smart TV. The application A allows watching streamed content, but also browsing video-on-demand and browsing the Internet. The input modalities include hand gestures recognition, speech recognition with a fixed set of voice commands, and the use of the remote control (which may be a classic IR remote control, a Smartphone, a tablet...). The context may be derived by analyzing the shown content (or picking up metadata), the input signal provided by the input sensor of the hand gesture recognition input modality, and the sound signal captured by the microphone used for speech recognition input modality. The context vector will represent whether a user is watching the smart TV by himself or with company, if he his browsing or watching content, the genre of content, if he is sitting up or laying down in the couch,...

The threshold estimator modules of the hand gestures recognition input modality and the speech recognition input modality may have learned (or have some prior knowledge) that during sport games watched by a group of person, gestures are not a very trusty input. Although the noise level may be very low for long periods of suspense, sudden gestures are not to be seen as an interface, but rather as reaction to a goal or fault in the game. In an advanced case, the method could even analyze the game itself and anticipate these climaxes automatically. The same yields for speech. So the remote control is the preferred interface in this context. But if the viewer is alone and laying down on the couch during the sports game, sudden gestures or speaking would be an anomaly and could be regarded as valid interface modalities, even preferred over standing up and getting the remote control. If the content is a movie, speech or gestures are good interfaces too, unless the user is eating. Then again it should be the remote. If the user is watching a show with friends, speech is too noisy, and so on...

A second example of interactive device 1 is a mobile phone. The input modalities include speech recognition and use of a touch screen interface. In order to use the speech recognition input modality of a prior art mobile phone, the user needs to explicitly put it in hands free mode (or docking it in his car), but there are times when he may forget to do so, especially when he has to switch a lot. It happens even more in situations where the user does not expect to have his hands tied. For instance, the user is at home feeding his baby. His phone is on the table and it rings. The user might not be able to pick up in time, and cannot put it in hands-free mode. In contrast, the mobile phone according to embodiments of the invention has enough context data to determine that the user's hands are tied. For example, it can detect that it is lying still, so the user is not holding it. It can detect that it is on a table, because the camera is blocked. It can hear the user is near with its microphone. It may even know (or have learned) that the user is feeding the baby every day around this time. In this context, the mobile phone should accept voice commands even without explicit enabling. Thus, the threshold estimator module of the speech recognition modality will set a low threshold.

A third example of interactive device 1 is augmented reality glasses. The input sensors include a positioning device (such as GPS), a camera, a microphone, head-movement detection and a single button. When the user is walking outdoors, head-movement is too noisy, but speech is socially accepted. In a meeting, speech cannot be used, but head movement can be trusted, unless the device has learned that the user nods along a lot during a meeting. The context of being outdoors can be measured by the GPS or the camera. That the user is in a meeting may be readable from his online calendar. The context vector will contain such data and the threshold will be adapted correspondingly.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for controlling a user interface of an interactive device (1), said method being executed by said interactive device (1) and comprising:
- determining (S2) an activity level (Lᵢ, Lₒ) of a user interface signal (I, O), and
- in response to a determination (S4) that said activity level is above a threshold (Tᵢ, To):
- determining (S5) a command (CMDᵢ) in function of said user interface signal, said user interface signal being a first input signal (I) provided by a first input sensor (4), or
- determining said user interface signal in function of a command (CMDₒ), said user interface signal being an output signal (O) for an output interface (5), wherein said method comprises:
- determining (S1) context data (V) at least in function of one second input signal (I") provided by a second input sensor (4), and
- determining (S3) said threshold (Tᵢ, Tₒ) in function of said context data (V).

2. Method according to claim 1, wherein determining (S1) context data (V) comprises:
- determining a plurality of context cues (Cₒ, Cₙ), at least one of said context cues being determined in function of said second input signal (I"), and
- determining a context vector (V) by applying a dimension reduction technique.

3. Method according to claim 2, wherein said dimension reduction technique splits said context cues (Cₒ, Cₙ) into a relevant set and an irrelevant set of parameters, based on priors and an orthogonality constraint.

4. Method according to one of claims 1 to 3, wherein determining (S3) said threshold (Tᵢ, Tₒ) in function of said context data (V) comprises:
- using a set of rules for associating a threshold value with the context data (V),
- determining a user feedback, and
- updating said set of rules in function of said user feedback.

5. Method according to claim 5, wherein determining said user feedback comprises:
- determining a positive reward in response to a determination that a user of the interactive device (1) used an input modality associated with said input signal (i) in a proper manner, in function of said input signal (I),
- determining a negative reward in response to a determination that a user of the interactive device (1) used said input modality with a signal to noise ratio lower that a predetermined threshold.

6. Method according to one of claims 1 to 5, comprising:
- determining a second activity level (Lᵢ) in function of a third input signal (I'),
- determining a second threshold (Tᵢ') in function of said context data (V), and
- in response to a determination that said second activity level (Lᵢ') is above said second threshold (Tᵢ'), determining a command (CMDᵢ) in function of said third input signal (I').

7. Method according to claim 6, comprising determining a preferred input modality (M) in function of said threshold (Tᵢ), said second threshold (Tᵢ') and/or said context data (V), and outputting said preferred input modality (M) to the user.

8. Method according to one of claims 6 and 7, wherein said input signal (I) is a sound signal, and the interactive device (1) has an interface analysis module (6) associated with a speech recognition input modality.

9. Method according to one of claims 6 to 8, wherein said second input signal (I') is a video signal, and the interactive device (1) has an interface analysis module (6') associated with a hand gesture recognition input modality.

10. Method according to one of claims 1 to 9, comprising:
- determining a third activity level (Lₒ) in function of said command (CMDₒ),
- determining a third threshold (To') in function of said context data (V), and
- in response to a determination that said third activity level (Lₒ') is above said third threshold (To'), determining a second output signal (O') in function of said command (CMDₒ).

11. Method according to claim 10, wherein said output signal (O) is a sound signal associated with a sound notification output modality.

12. Method according to one of claims 10 and 11, wherein said second output signal (O') is an image signal associated with a visual notification output modality.

13. Computer program comprising instructions for performing the method of one of claims 1 to 12 when said instructions are executed by a computer.

14. Interactive device (1) having a user interface and comprising:
- means for determining an activity level (Lᵢ, Lₒ) of a user interface signal (I, O), and
- means, activated in response to a determination that said activity level is above a threshold (Tᵢ, Tₒ), for:
- determining a command (CMDᵢ) in function of said user interface signal, said user interface signal being a first input signal (I) provided by a first input sensor (4), or
- determining said user interface signal in function of a command (CMDₒ), said user interface signal being an output signal (O) for an output interface (5), wherein said interactive device (1) comprises:
- means for determining context data (V) at least in function of one second input signal (I") provided by a second input sensor (4), and
- means for determining said threshold (Tᵢ, Tₒ) in function of said context data (V).

## Amended claims

### Amended claims in accordance with Rule 137(2) EPC.

**1.** Method for controlling a user interface of an interactive device (1), said method being executed by said interactive device (1) and comprising:
- determining (S2) an activity level (Lᵢ) of a first input signal (I) provided by a first input sensor (4),
- determining (S1) context data (V) at least in function of one second input signal (I") provided by a second input sensor (4),
- determining (S3) a first threshold (Tᵢ) in function of said context data (V),
- in response to a determination (S4) that said activity level is above said first threshold (Tᵢ), determining (S5) a command (CMDᵢ) in function of said first input signal,
**characterized in that** it comprise:
- determining a second activity level (Lᵢ') in function of a third input signal (I'),
- determining a second threshold (Tᵢ') in function of said context data (V),
- in response to a determination that said second activity level (Lᵢ') is above said second threshold (Tᵢ'), determining a command (CMDᵢ') in function of said third input signal (I'),
- determining a preferred input modality (M) in function of said first threshold (Tᵢ), said second threshold (Tᵢ') and/or said context data (V), and
- outputting said preferred input modality (M) to the user.

**2.** Method according to claim 1, wherein determining (S1) context data (V) comprises:
- determining a plurality of context cues (Cₒ, Cₙ), at least one of said context cues being determined in function of said second input signal (I"), and
- determining a context vector (V) by applying a dimension reduction technique.

**3.** Method according to claim 2, wherein said dimension reduction technique splits said context cues (Cₒ, Cₙ) into a relevant set and an irrelevant set of parameters, based on priors and an orthogonality constraint.

**4.** Method according to one of claims 1 to 3, wherein determining (S3) said first threshold (Tᵢ) in function of said context data (V) comprises:
- using a set of rules for associating a threshold value with the context data (V),
- determining a user feedback, and
- updating said set of rules in function of said user feedback.

**5.** Method according to claim 4, wherein determining said user feedback comprises:
- determining a positive reward in response to a determination that a user of the interactive device (1) used an input modality associated with said input signal (I) in a proper manner, in function of said input signal (I),
- determining a negative reward in response to a determination that a user of the interactive device (1) used said input modality with a signal to noise ratio lower that a predetermined threshold.

**6.** Method according to one of claims 1 to 5, wherein said first input signal (I) is a sound signal, and the interactive device (1) has an interface analysis module (6) associated with a speech recognition input modality.

**7.** Method according to one of claims 1 to 6, wherein said second input signal (I') is a video signal, and the interactive device (1) has an interface analysis module (6') associated with a hand gesture recognition input modality.

**8.** Method according to one of claims 1 to 7, comprising:
- determining a third activity level (Lₒ) in function of an output command (CMDₒ),
- determining a third threshold (Tₒ) in function of said context data (V), and
- in response to a determination that said third activity level (Lₒ) is above said third threshold (Tₒ), determining an output signal (○) in function of said command (CMDₒ).

**9.** Method according to claim 8, wherein said output signal (○) is a sound signal associated with a sound notification output modality.

**10.** Method according to one of claims 8, wherein said output signal (○) is an image signal associated with a visual notification output modality.

**11.** Computer program comprising instructions for performing the method of one of claims 1 to 10 when said instructions are executed by a computer.

**12.** Interactive device (1) having a user interface and comprising:
- means for determining an activity level (Lᵢ) of a first input signal (I) provided by a first input sensor (4),
- means for determining context data (V) at least in function of one second input signal (I") provided by a second input sensor (4),
- means for determining a first threshold (Tᵢ) in function of said context data (V),
- means for determining a command (CMDᵢ) in function of said first input signal in response to a determination (S4) that said activity level is above said first threshold (Tᵢ),
**characterized in that** it comprise:
- means for determining a second activity level (Lᵢ') in function of a third input signal (I'),
- means for determining a second threshold (Tᵢ') in function of said context data (V),
- means for determining a command (CMDᵢ') in function of said third input signal (I') in response to a determination that said second activity level (Lᵢ') is above said second threshold (Tᵢ'),
- means for determining a preferred input modality (M) in function of said first threshold (Tᵢ), said second threshold (Tᵢ') and/or said context data (V), and
- means for outputting said preferred input modality (M) to the user.
